# EUROPEAN PATENT APPLICATION

(11) **EP 4 841 461 A1**
(43) Date of publication of application: **18.11.2026**
(21) Application number: 26178774.1
(22) Date of filing: 14.05.2026
(51) Int. Cl.: G06F 16/242, G06F 16/2452, G06F 40/295

(54) **RETRIEVING DATA FROM RELATIONAL DATABASES USING LLM-BASED STRUCTURED QUERY GENERATION FROM NATURAL LANGUAGE QUERY**

(30) Priority: 15.05.2025 IN 202521046972
(71) Applicant: Tata Consultancy Services Limited, Maharashtra (IN)
(72) Inventor: KULKARNI, Aniket Nandkishor, 411057 Pune, Maharashtra (IN); SAHU, Varun Singh, 110001 New Delhi, Delhi (IN); POOJARY, Sudhakara Deva, 400607 Thane, Maharashtra (IN)
(74) Representative: Goddar, Heinz J.

(57) **Abstract**

State of the art techniques have limitations is understanding intent of the natural language query in context of available database schema. This leads to generation of inappropriate structured query, effectively resulting in inappropriate data retrieval from database. A method for retrieving data from relational databases using LLM-based structured query generation from natural language query is provided. A first instance of LLM supports a schema mapping module while a second instance of LLM supports a query generation module. The SQL query generation utilizes ensemble of methods during query building for searching the database, wherein a full-text search, substring search, and semantic search is applied for searching short text fields of the relevant text-based columns, and wherein directly semantic search is applied to capture relevant content based on meaning, for searching long text fields of the relevant text-based columns if the approach used for short text field fails to retrieve intended data.

## Description

### CROSS-REFERENCE TO RELATED APPLICATIONS AND PRIORITY

The present application claims priority to Indian application no. 202521046972, filed on May 15, 2025.

### TECHNICAL FIELD

The embodiments herein generally relate to the field of relational database data retrieval and, more particularly, to a method and system for retrieving data from relational databases using Large Language Model (LLM)-based structured query generation from natural language query.

### BACKGROUND

With maximum information storage moving to digital, relational databases are critical to store and manage data. While Structured Query Language (SQL) remains a powerful language for querying these databases, it often presents a steep learning curve for non-technical users. Natural language queries are the best mechanism to cater to non-technical users. There have been advancements in Large Language Model (LLM) generated SQL queries as LLMs can effectively map database schema and relationships, but LLM struggles with generating accurate query conditions as exact values of the data are not available during query building.

In current scenario LLM based query generation method cannot accurately identify the conditions. As user input is in natural language, it may contain semantically similar words rather than exact words to match in the database, also when the values in database are not known it is even more difficult to generate accurate condition. Hence SME/DB expert intervention is required to review and rectify the query conditions before it can be executed.

Major challenges with existing LLM based structured query generation include: Inability to Handle Unknown Values: Traditional methods convert natural language into SQL by parsing the user's input. However, they struggle to generate appropriate conditions for queries when the actual data content is not known at query generation time. Semantic Ambiguity: User inputs may contain semantically similar entities but mapping them accurately to database values without knowing exact matches remains difficult. Limited Support for Text-Based Searches: Text-based columns require additional mechanisms for effective semantic searching, which traditional methods often lack. Limitations of LLM-Generated Queries: Large Language Models (LLMs) can generate SQL queries when provided with the database schema. However, generating exact conditional queries is not possible as the data values are not present in the schema.

The limitations of the exiting approaches can be understood by way of example. Suppose the input user query in natural language is: "Find investors for startups working in medical sector." In the database schema, the categorical column that exists is industries which contains a list of relevant industries of any organization and that each industry is a unique value from a set of finite values. For the example above, the unique value of industry is Healthcare. Now to formulate the accurate query condition, knowing the "Healthcare" is utmost important which is neither available in database schema nor in user query. State of the art techniques have limitations is understanding intent of the natural language query in context of available database schema. This leads to generation of inappropriate structured query, effectively resulting in inappropriate data retrieval from database.

### SUMMARY

Embodiments of the present disclosure present technological improvements as solutions to one or more of the above-mentioned technical problems recognized by the inventors in conventional systems.

For example, in one embodiment, a method for retrieving data from relational databases using Large Language Model (LLM)-based structured query generation from natural language query is provided.

The method includes extracting a set of user requirements and a set of filtering criteria from a natural language user query using extended database schema, wherein the natural language query instructs extraction of data from a database. Further, the method includes mapping via a first LLM instance executed by the one or more hardware processors, the set of user requirements and the set of filtering criteria to a plurality of relevant categorical columns and column types present within a plurality of tables of the database, and fetch a set unique values for the plurality of relevant categorical columns and vector embeddings for one or more text based columns within a plurality of relevant columns.

Furthermore, the method includes semantically mapping the set of unique values to respective query values in the natural language user query for each categorical column among the plurality of relevant categorical columns to generate a mapped input; and generating a Structured Query Language (SQL) query in accordance with the mapped input via a second instance of the LLM executed by the one or more hardware processors, wherein the database is queried using the SQL query to extract data in accordance with the natural language user query.

In another aspect, a system for retrieving data from relational databases using Large Language Model (LLM)-based structured query generation from natural language query. is provided. The system comprises a memory storing instructions; one or more Input/Output (I/O) interfaces; and one or more hardware processors coupled to the memory via the one or more I/O interfaces, wherein the one or more hardware processors are configured by the instructions to extract a set of user requirements and a set of filtering criteria from a natural language user query using extended database schema, wherein the natural language query instructs extraction of data from a database. Further, the system maps via a first LLM instance executed by the one or more hardware processors, the set of user requirements and the set of filtering criteria to a plurality of relevant categorical columns and column types present within a plurality of tables of the database, and fetch a set unique values for the plurality of relevant categorical columns and vector embeddings for one or more text based columns within a plurality of relevant columns. Furthermore, the system semantically maps the set of unique values to respective query values in the natural language user query for each categorical column among the plurality of relevant categorical columns to generate a mapped input; and generates a Structured Query Language (SQL) query in accordance with the mapped input via a second instance of the LLM executed by the one or more hardware processors, wherein the database is queried using the SQL query to extract data in accordance with the natural language user query.

In yet another aspect, there are provided one or more non-transitory machine-readable information storage mediums comprising one or more instructions, which when executed by one or more hardware processors causes a method for retrieving data from relational databases using Large Language Model (LLM)-based structured query generation from natural language query.

The one or more instructions which when executed by the one or more hardware processors cause: extracting a set of user requirements and a set of filtering criteria from a natural language user query using extended database schema, wherein the natural language query instructs extraction of data from a database. Further, the one or more instructions which when executed by the one or more hardware processors cause mapping via a first LLM instance executed by the one or more hardware processors, the set of user requirements and the set of filtering criteria to a plurality of relevant categorical columns and column types present within a plurality of tables of the database, and fetch a set unique values for the plurality of relevant categorical columns and vector embeddings for one or more text based columns within a plurality of relevant columns. As can be understood, the vector embeddings can be fetched for all text-based columns except categorical columns. Furthermore, the one or more instructions which when executed by the one or more hardware processors cause: semantically mapping the set of unique values to respective query values in the natural language user query for each categorical column among the plurality of relevant categorical columns to generate a mapped input; and generating a Structured Query Language (SQL) query in accordance with the mapped input via a second instance of the LLM executed by the one or more hardware processors, wherein the database is queried using the SQL query to extract data in accordance with the natural language user query.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for retrieving data from relational databases using Large Language Model (LLM)-based structured query generation from natural language query, in accordance with some embodiments of the present disclosure.
FIG. 1B illustrates an architectural overview of the system of FIG. 1A, in accordance with some embodiments of the present disclosure.
FIGS. 2A through 2B is a flow diagram illustrating a method for retrieving data from relational databases using LLM-based structured query generation from natural language query, using the system depicted in FIG. 1A and 1B, in accordance with some embodiments of the present disclosure.
FIGS. 3A through 4B depict screen shots of sample database schema and mapped queries to explain data retrieval for natural language user queries, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for retrieving data from relational databases using Large Language Model (LLM)-based structured query generation from natural language query. The method provides a unique approach that enhances the generation of SQL queries by dynamically incorporating data content associated with databases into the query-building process. The first instance of the LLM understands and incorporates database schema by mapping user query intent to database schema. The second LLM instance generates SQL query by using the user query, and the database schema while using ensemble of methods

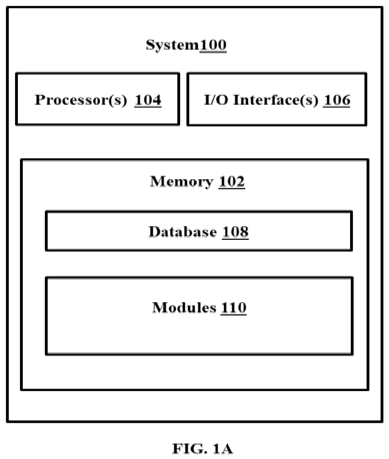

Referring now to the drawings, and more particularly to FIGS. 1A through 4B, where similar reference characters denote corresponding features consistently throughout the figures, there are shown preferred embodiments, and these embodiments are described in the context of the following exemplary system and/or method.

FIG. 1A is a functional block diagram of a system 100 for retrieving data from relational databases using Large Language Model (LLM)-based structured query generation from natural language query, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

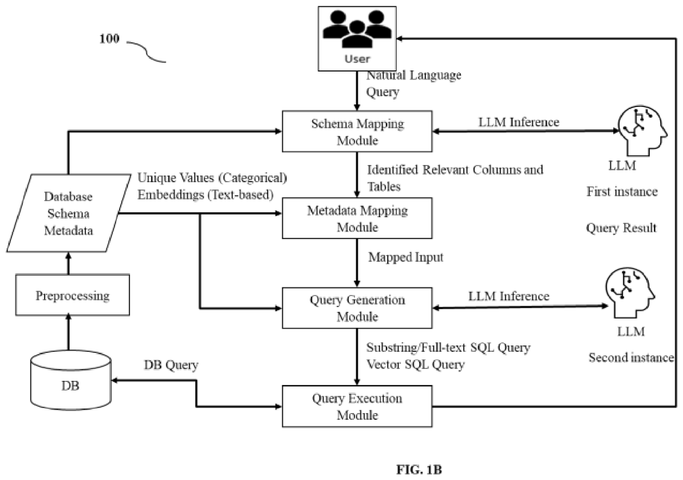

In an embodiment, the memory 102 includes a plurality of modules 110 such as Schema Mapping Module, Metadata Mapping Module, Query Generation Module, and Query Execution Module as depicted in architectural overview of system 100 in FIG. 1B. The plurality of modules also include LLM, with a first instance of LLM supporting the schema mapping module while a second instance of LLM supporting the query generation module.

The plurality of modules 110 include programs or coded instructions that supplement applications or functions performed by the system 100 for executing different steps involved in the process of retrieving data from relational databases using LLM-based structured query generation from natural language query, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted piece of code for refinement and data that is processed, received, or generated as a result of the execution of the plurality of modules in the module(s) 110.

Although the database 108 is shown internal to the system 100, it will be noted that, in alternate embodiments, the database 108 can also be implemented externally to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in the architectural overview as in FIG. 1B and FIGS. 2 through FIG. 4.

Additionally the database 108 can include relational databases, which are queried by system generated SQL query to retrieve information of interest, as specified in natural language query.

FIG. 1B depicts architectural overview of the system 100. The database (part of database or repository 108) from which data is to be retrieved, is prior analyzed, preprocessed to obtain database schema and associated metadata of the schema.

The system 100 enables handling categorical columns, as explained below. Before generating the structured query (SQL) query, the database 108 is preprocessed to differentiate normal text columns from categorical columns. This is done by tagging columns as categorical in the schema. If the column is already an enumerator, it is automatically tagged, and unique values are fetched for it. For text columns, this tagging and value-fetching process is done explicitly in the schema.

Further, the accuracy of query generation is enhanced by dynamically mapping a natural language query received from a user to the most relevant value in the dataset. This is achieved by leveraging the unique values associated with each categorical column and performing semantic mapping to find the closest match. This process ensures that the query conditions are both valid and precise. To facilitate this, columns identified as categorical are tagged accordingly in the schema. These tagged columns are then incorporated into the system as in-context learning for the Large Language Model (LLM). Based on this schema information, the LLM can accurately map the natural language input to the appropriate categorical value during query generation. The finite nature of categorical columns, with a fixed set of allowed values, makes this mapping process efficient and reliable, minimizing errors and ensuring the query conditions align with the actual data values.

The method enables handling Text-Based Columns as explained below: When dealing with text-based columns containing large datasets (e.g., product descriptions, customer feedback comments), the challenge lies in capturing the contextual and semantic nuances of the text. For these cases, semantic search is employed as a mechanism to better understand the underlying meaning, especially for longer text entries. However, short text fields, such as organization names or product codes, introduce additional challenges that need a more tailored approach.

Challenges with handling Large Text Fields:
i. Contextual Understanding: Large text fields often require a deep understanding of the context to accurately retrieve relevant data. Semantic search helps by capturing subtle meanings beyond exact word matches.
ii. Scalability and Performance: With large datasets, executing semantic searches across vast amounts of text can be computationally expensive and may lead to latency issues, especially when dealing with millions of text entries.
iii. Precision in Filtering: While semantic search can identify similar concepts, it may sometimes produce results that are conceptually related but not directly relevant, requiring additional post-processing or filtering.

Challenges with Short Text Fields:
i. Exact matching issues: Short text fields, such as organization names, often require precise or near-exact matches. Semantic search might prioritize similarity over exact matches, potentially leading to errors (e.g., "Google LLC" vs. "Google"). Critical distinctions between similar names (e.g., "Apple Inc." vs. "Apple Bank") may be overlooked.
ii. High computational overhead: Applying semantic search on short text entries can still be computationally costly, particularly when there is a large volume of text entries or complex query requirements.
iii. Challenge of distinguishing subtle variations: Short text fields often differ in subtle ways (e.g., "ABC Corp" vs. "ABC Corporation"), which embeddings may fail to distinguish effectively. Results may include irrelevant entries due to embeddings focusing on semantic closeness rather than precise textual differences.
iv. Lack of contextual understanding for ambiguities: Short text fields like organization names often lack the context required to generate meaningful embeddings (e.g., "Delta" could refer to an airline, a dental clinic, or a logistics company). Semantic search may produce a broad set of results with varying relevance, requiring additional filtering logic.

To address these challenges, the method executed by the system 100 of FIG. 1A and 1B uses an ensemble of methods executed by the query execution module, combining multiple techniques to ensure both efficiency and accuracy. The key methods employed are:
1. Full-text search: For both large and short text fields, full-text search is a deterministic method that provides fast and precise matches. It is particularly effective for large datasets, where semantic meaning may be less important than exact matches of words and phrases.
2. Substring search: This method complements full-text search, especially for situations where partial matches (e.g. abbreviations, truncations) are common. It can catch variations that full-text search might miss, improving precision for short text fields.
3. Semantic Search: This method is used to capture the contextual meaning of text, particularly for larger fields where full-text or substring searches may fall short. Semantic search focuses on understanding the meaning behind words, handling synonyms and related concepts, making it ideal for more complex datasets.

Effectiveness of ensemble approach:
For Short Text Fields: The combination of full-text search, substring search, and semantic search ensures addressing various scenarios. Full-text or substring search is prioritized for exact matches (e.g., "Google" or "ABC Corp"), while semantic search is applied when slight variations or misspellings occur (e.g., "Akme Corp" vs. "Acme Corp"). This hybrid approach guarantees that the accuracy is maximized while minimizing computational costs.
For Large Text Fields: Full-text or substring search is typically ineffective. As a result, directly semantic search is applied to capture relevant content based on meaning. By using an ensemble of search methods, a balance is struck between precision, speed, and flexibility, ensuring that the method and system 100 provides both deterministic results and flexibility when necessary. This hybrid method, combining deterministic queries with semantic flexibility, improves the accuracy and efficiency of querying across both large and short text fields.

Following are the technical advantages provided by the system 100 over existing approaches.

Dynamic data integration: Unlike traditional methods, the system 100 incorporates real-time database content into the query-building process. This ensures that the generated queries are always aligned with the actual data values.

Semantic Understanding: Further, by leveraging vector embedding, a robust semantic search capabilities are provided, enabling precise matching for text-based queries.

Adaptability to user input: The system 100 can handle semantically similar entities and ambiguous user input by dynamically mapping to the most appropriate database values.

Enhanced accuracy: The approach followed significantly reduces the likelihood of errors caused by mismatched or nonexistent values in the generated SQL queries.

FIG. 1B depicts the architectural overview of the system. The query generation process begins with the user providing input in natural language. The core challenge is accurately identifying both the desired output (i.e., the attributes or columns to be retrieved) and the filters (i.e., the conditions under which the data should be filtered). Once these elements are identified, they must be mapped to the appropriate columns in the database schema.
1. Mapping the Desired Output and Filters (Schema Mapping Module)
   The first task is to map the desired output and filter conditions to the corresponding database columns. This can be a simple one-to-one mapping or may involve more complex inferences that span multiple columns and tables across the database. The system uses in-context schema information to understand which columns contain the necessary data and how to establish necessary joins between related tables.
2. Categorizing Column Types (Metadata Mapping Module)
   Once the relevant columns and tables are identified, the system fetches the relevant metadata, such as unique values for categorical columns and vector embeddings for text-based columns.
3. Mapping User Input to Database Values (Metadata Mapping Module)
   Specifically for categorical columns, the system dynamically maps the values mentioned in the user query to the allowed set of unique values retrieved from the database.
4. Recognizing Necessary **Joins** (Query generation module)
   Based on the schema and the identified columns, the system determines any necessary joins between tables. For example, if the user request involves data from multiple related tables, the system identifies the relationship between these tables and automatically adds the required join clauses to the SQL query. The query generation module uses ensemble methods for query generation. However, this ensemble approach is relevant if short text fields are identified in the mapping at step 2.
   Thus, in such cases second instance of the LLM generates two sets of queries:
      1. With text based search
      2. Vector based semantic search
5. Generating the SQL Query- query generation module (FIG. 1B)
   After the columns and tables are mapped, and necessary joins are identified, the system proceeds to generate the SQL query. The final SQL query incorporates the following components:
   - Desired Output: The system determines which columns and tables should be selected based on the user's query.
   - Filter Conditions: The system applies filters based on the column type (categorical, text-based, numerical, date/time). For categorical columns, the query filters based on exact value matches. For text-based columns, the system first attempts a standard string search, and if that does not yield results, falls back to semantic search. For numerical and date/time columns, the relevant conditions (e.g., >, <, =, between) are applied.
   - Joins: If multiple tables are involved, the necessary joins are added based on the relationships defined in the schema.

In cases where text-based columns with vector embeddings are involved, the system may generate multiple queries. A full-text or substring search query is created first to perform an exact or partial match search on the text and a semantic search query is as a fallback.

Thus, at the query generation module, the second instance of the LLM is provided with natural language user query as received, along with extended database schema (base database schema + descriptions of the columns + relationship between tables obtained at Step 1 by the "Schema Mapping Module," and Step 2 and Step 3 by the "Metadata Mapping Module").

The second instance of the LLM is responsible for interpreting user input and identify said mapping.

The first instance and second instance of LLM can be realized using example GenAI models like GPT-4o and the like.

### 6. Execution of the Query- query execution module

Once the query is generated, the system 100 first attempts to execute it with the standard string-based search for text columns. If the output is not as expected or if no relevant results are retrieved, the system executes the semantic search query as a fallback. This hybrid approach ensures that the system is capable of retrieving accurate results, even when exact matches for text-based columns are difficult to obtain.

Example user Query: Find all the startups working in the field of AI where Khosla ventures have invested. Here, schema mapping module can identify "name" column from the "organizations" table as the required output. Additionally, the "category_list" column from the "organizations" table is designated as a filter for selecting the startup field, and the "name" column from the "investors" table is identified as a filter for selecting based on the investor's name. Next, in metadata mapping module, first the "category_list" column is identified as a categorical array containing strings using the database schema. Taking into consideration the unique values from the schema with respect to the column, the value "AI" is mapped to "Artificial Intelligence." Second, "name" column in "investors" table is identified as short text field and respective vector embeddings are fetched if available. Hence, the query generation module will accurately form the query using appropriate select clauses and filter conditions.

It can be noted that, as an ensemble method, the system 100 uses vector based semantic search as fallback mechanism if text search based query at step 5 fails to generate response.

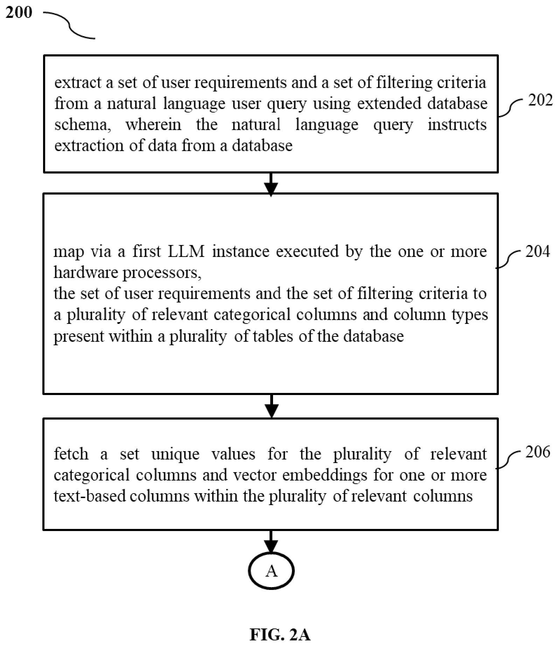

FIGS. 2A through 2B is a flow diagram illustrating a method 200 for retrieving data from relational databases using Large Language Model (LLM)-based structured query generation from natural language query, using the system100 depicted in FIG. 1A and 1B, in accordance with some embodiments of the present disclosure.

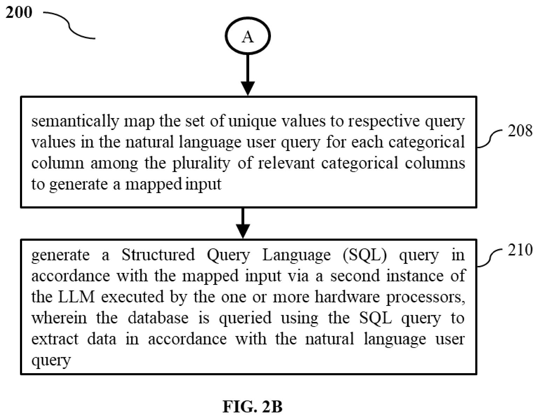

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the one or more hardware processors 104 are configured by the instructions to extract a set of user requirements and a set of filtering criteria from a natural language user query using extended database schema, wherein the natural language query instructs extraction of data from a database.

At step 204 of the method 200, the one or more hardware processors 104 are configured by the instructions to map, via the first LLM instance, the set of user requirements and the set of filtering criteria to a plurality of relevant categorical columns and column types present within a plurality of tables of the database.

Further, at step 206 of the method 200, the one or more hardware processors 104 are configured by the instructions to fetch a set unique values for the plurality of relevant categorical columns and vector embeddings for one or more text based columns within a plurality of relevant columns within the tables in the database.

At step 208 of the method 200, the one or more hardware processors 104 are configured by the instructions to semantically map the set of unique values to respective query values in the natural language user query for each categorical column among the plurality of relevant categorical columns to generate a mapped input.

At step 210 of the method 200, the one or more hardware processors 104 are configured by the instructions to generate a Structured Query Language (SQL) query, via a second instance of the LLM in accordance with the mapped input, wherein the database is queried using the SQL query to extract data in accordance with the natural language user query.

The. SQL query generation utilizes ensemble of methods during query building for searching the database, wherein a full-text search, substring search, and semantic search is applied for searching short text fields of the relevant text-based columns, and wherein a directly semantic search is applied to capture relevant content based on meaning for searching long text fields of the relevant text based columns if the approach used for short text field fails to retrieve intended data.

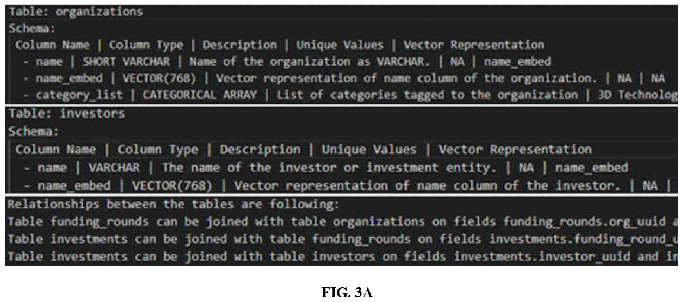

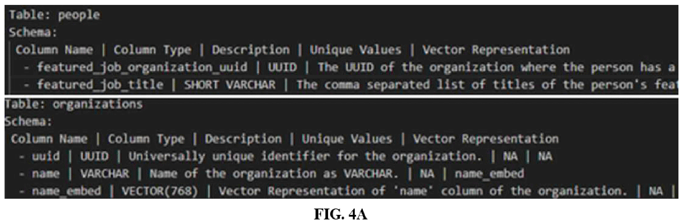

Steps 202 to 210 can be better understood by way of example user queries for sample database schemas shown in FIG. 3A and 4A.

### Example A

Query: Find all the startups working in the field of AI where Khosla ventures have invested.

### Database Schema Sample: FIG. 3A

### Step 1 -> Schema Mapping Module:

- The "name" key from the "organizations" table is identified as the required output.
- Additionally, the "category_list" column from the "organizations" table is designated as a filter for selecting the field, and the "name" column from the "investors" table is identified as a filter for selecting based on the investor's name.
- Furthermore, the "category_list" column is identified as a categorical field, while the "name" columns are identified as small text fields.

### Step 2 -> Metadata Mapping Module:

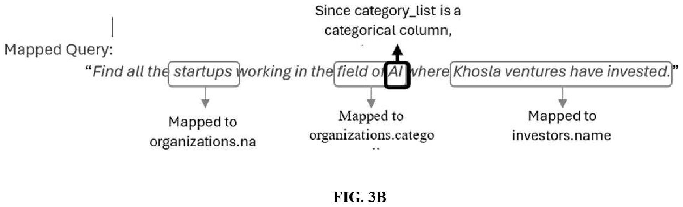

- Here "category_list" column is identified as a categorical array containing strings using the database schema. Taking into consideration the unique values from the schema with respect to the column, the value "AI" is mapped to "Artificial Intelligence."
- Also, "name" column in "investors" table is identified as short text field and respective vector embeddings are fetched if available.
- This mapping is key to retrieving relevant records from the database. It ensures that regardless of the abbreviations and nomenclature used in query, the filters are applied using the semantic meaning of the value. Mapped query is as depicted in FIG. 3B

### Step 3 -> Query Generation Module:

• "name" field from organizations table is identified as the required output. Filters are added based on the type of columns reflected in database schema.
• Resolving joins: 'organizations' and 'investors' are two relevant tables identified during schema mapping. However, to connect 'investors' with 'organizations', 'organizations' is joined with 'funding_rounds' using 'uuid' and 'org_uuid respectively and then 'funding_rounds' is joined with 'investments' using 'uuid' and 'funding_round_uuid' respectively. Finally, 'investments' is joined with 'investors' using 'uuid' and 'investor_uuid' respectively.
• Query Generated:

**Table 1**

| |
|---|
| ‴sql |
| SELECT organizations.name, organizations.total_funding_usd |
| FROM organizations |
| JOIN funding_rounds ON organizations.uuid = funding_rounds.org_uuid |
| JOIN investments ON funding_rounds.uuid = investments.funding_round_uuid |
| JOIN investors ON investments.investor_uuid = investors.uuid |
| WHERE ' Artificial Intelligence' = ANY(organizations.category_list) |
| AND LOWER(investors.name) = LOWER('Khosla Ventures') |
| ‴ |

### Step 4 -> Query Executed Module:

In this case, the above generated query returns relevant records after execution. If no relevant records were fetched and vector embeddings were present for the text columns then semantic query would have also been generated.

### Output:

("OpenAI",)
("CHARM Therapeutics",)
("Waabi",)
("Sarvam AI",)
("Daedalus",)
("Daedalus",)
("Daedalus",)
("Daedalus",)
("Sakana AI",)
("Vayu Robotics",)

### Example B

Query: Who are the founders of Canvas ltd.?
Database Schema Sample: FIG. 4A

### Step 1 -> Schema Mapping Module:

- The required output is the founders. However, there is no direct mapping to a 'founder' column of any of the provided tables. But it can be inferred that a 'founder' would be a 'person' and might be associated with an 'organization.' Therefore, mapping of 'founder' can be a record in the 'people' table. Additionally, a filter is required on "featured_job_title" column of "people" table to ensure only records of founders are fetched.
- "Canvas ltd." Is identified as an organization and filter is mapped to the "name" column from the "organizations" table.
- Furthermore, both the "name" column and "featured_job_title" columns are identified as short text fields.

### Step 2 -> Metadata Mapping Module:

- As both "name" column in "organizations" table and "featured_job_title" in "people" table are identified as short text field, availability of their respective vector embeddings is checked. Embedding is found only for "name" column.

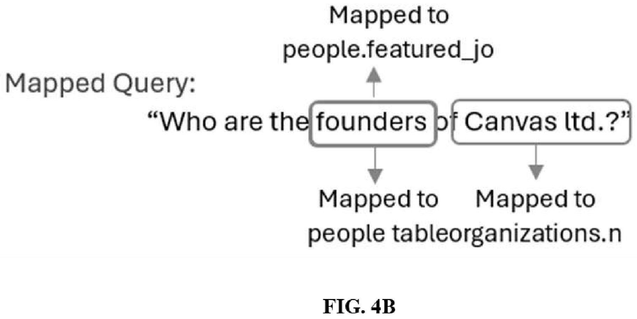

Mapped query as depicted in FIG. 4B

### Step 3 -> Query Generation Module:

• The entire "people" table record from organizations table is identified as the required output. Filters are added based on the type of columns reflected in database schema.
• Resolving joins: organizations and 'people' are two relevant tables identified during schema mapping. The 'people' table is joined with the 'organizations' table using the 'featured_job_organization_uuid' and 'uuid' columns respectively.
• Query Generated:

**Table 2**

| |
|---|
| ‴sql |
| SELECT people _view.name FROM people JOIN organizations ON people.featured_job_organization_uuid = organizations.uuid WHERE organizations _view.name ILIKE '%Canvas Ltd.%' AND people_view.featured_job_title ILIKE '%founder%;' |
| ‴ |

### Step 4 -> Query Executed Module:

The above generated query does not return the relevant records after execution. As no relevant records were fetched and vector embeddings were present for the "name" column, the semantic query is generated.

### Step 5 -> Semantic Query Generation and Execution:

• Query Generated:

**Table 3**

| |
|---|
| ‴sql |
| WITH query_embedding AS (SELECT get_embedding_from_api('Canvas Ltd.') AS embedding) SELECT people.*, organizations. name_embed 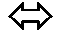 query_embedding. embedding |
| as distance FROM query_embedding, people JOIN organizations ON people.featured_job_organization_uuid = organizations.uuid WHERE people.featured_job_title ILIKE '%founder%' AND organizations.name_embed 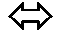 query_embedding. embedding <= 0.25 ORDER BY distance; |
| ‴ |

The above generated query returns the relevant records after execution while matching.

### Output:

('3567c9ab-60fa-7cac-abb0-132a064ba598', 'Kevin Albert', 'person', 'Kevin', 'Albert', 'male', ''_{,} '', None, None, '939cb2b6-0750-4ae3-82cc-1ac4b7d6e042', 'Canvas Corp', 'Founder & CEO')

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Thus, it can be understood that state of the art techniques have limitations is understanding intent of the natural language query in context of available database schema. This leads to generation of inappropriate structured query, effectively resulting in inappropriate data retrieval from database. The method herein discloses approach for retrieving data from relational databases using LLM-based structured query generation from natural language query is provided. A first instance of LLM supports a schema mapping module while a second instance of LLM supports a query generation module. The SQL query generation utilizes ensemble of methods during query building for searching the database, wherein a full-text search, substring search, and semantic search is applied for searching short text fields of the relevant text-based columns, and wherein directly semantic search is applied to capture relevant content based on meaning, for searching long text fields of the relevant text-based columns if the approach used for short text field fails to retrieve intended data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for data retrieval comprising:
extracting (202), via one or more hardware processors, a set of user requirements and a set of filtering criteria from a natural language user query using an extended database schema, wherein the natural language query instructs extraction of data from a database;
mapping (204), via a first LLM instance executed by the one or more hardware processors,
the set of user requirements and the set of filtering criteria to a plurality of relevant categorical columns and column types present within a plurality of tables of the database;
fetching (206), via the one or more hardware processors, a set unique values for the plurality of relevant categorical columns and vector embeddings for one or more text based columns within a plurality of relevant columns of the plurality of tables;
semantically mapping (208) via the one or more hardware processors, the set of unique values to respective query values in the natural language user query for each categorical column among the plurality of relevant categorical columns to generate a mapped input; and
generating (210) a Structured Query Language (SQL) query in accordance with the mapped input via a second instance of the LLM executed by the one or more hardware processors, wherein the database is queried using the SQL query to extract data in accordance with the natural language user query.

2. The method as claimed in claim 1, wherein the extended database schema and associated database schema metadata is obtained by preprocessing the database to differentiate with a tag a set of normal text columns from the plurality of categorical columns, wherein the tag enables in-context learning for the first instance of the LLM.

3. The method as claimed in claim 1, wherein the second instance of the LLM is provided with natural language user query as received, along with the extended database schema comprising base database schema, descriptions of the relevant categorical columns and relationship between the plurality of tables of the database.

4. The method as claimed in claim 1, wherein the SQL query generation utilizes ensemble of methods during query building for searching the database, wherein a full-text search, substring search, and semantic search is applied for searching short text fields of relevant text-based columns of the plurality of tables, and wherein a directly semantic search is applied to capture relevant content based on meaning for searching long text fields of the relevant text-based columns if the approach used for short text field fails to retrieve intended data.

5. A system (100) for database retrieval , the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
extract a set of user requirements and a set of filtering criteria from a natural language user query using extended database schema, wherein the natural language query instructs extraction of data from a database;
map via a first LLM instance executed by the one or more hardware processors,
the set of user requirements and the set of filtering criteria to a plurality of relevant categorical columns and column types present within a plurality of tables of the database;
fetch a set unique values for the plurality of relevant categorical columns and vector embeddings for one or more text based columns within a plurality of relevant columns plurality of tables;
semantically map the set of unique values to respective query values in the natural language user query for each categorical column among the plurality of relevant categorical columns to generate a mapped input; and
generate a Structured Query Language (SQL) query in accordance with the mapped input via a second instance of the LLM executed by the one or more hardware processors, wherein the database is queried using the SQL query to extract data in accordance with the natural language user query.

6. The system as claimed in claim 5, wherein the extended database schema and associated database schema metadata is obtained by preprocessing the database to differentiate with a tag a set of normal text columns from the plurality of categorical columns, wherein the tag enables in-context learning for the first instance of the LLM.

7. The system as claimed in claim 5, The method as claimed in claim 1, wherein the second instance of the LLM is provided with natural language user query as received, along with the extended database schema comprising base database schema, descriptions of the relevant categorical columns and relationship between the plurality of tables of the database.

8. The system as claimed in claim 5, wherein the SQL query generation utilizes ensemble of methods during query building for searching the database, wherein a full-text search, substring search, and semantic search is applied for searching short text fields of a relevant text-based columns of the plurality of tables, and wherein a directly semantic search is applied to capture relevant content based on meaning for searching long text fields of the relevant text-based columns if the approach used for short text field fails to retrieve intended data.

9. One or more non-transitory machine-readable information storage mediums comprising one or more instructions which when executed by one or more hardware processors cause:
extracting a set of user requirements and a set of filtering criteria from a natural language user query using an extended database schema, wherein the natural language query instructs extraction of data from a database;
mapping, via a first LLM instance
the set of user requirements and the set of filtering criteria to a plurality of relevant categorical columns and column types present within a plurality of tables of the database;
fetching a set unique values for the plurality of relevant categorical columns and vector embeddings for one or more text based columns within a plurality of relevant columns of the plurality of tables;
semantically mapping the set of unique values to respective query values in the natural language user query for each categorical column among the plurality of relevant categorical columns to generate a mapped input; and
generating a Structured Query Language (SQL) query in accordance with the mapped input via a second instance of the LLM executed by the one or more hardware processors, wherein the database is queried using the SQL query to extract data in accordance with the natural language user query.

10. The one or more non-transitory machine-readable information storage mediums as claimed in claim 9, wherein the extended database schema and associated database schema metadata is obtained by preprocessing the database to differentiate with a tag a set of normal text columns from the plurality of categorical columns, wherein the tag enables in-context learning for the first instance of the LLM.

11. The one or more non-transitory machine-readable information storage mediums as claimed in claim 9, wherein the second instance of the LLM is provided with natural language user query as received, along with the extended database schema comprising base database schema, descriptions of the relevant categorical columns and relationship between the plurality of tables of the database

12. The one or more non-transitory machine-readable information storage mediums as claimed in claim 9, wherein the SQL query generation utilizes ensemble of methods during query building for searching the database, wherein a full-text search, substring search, and semantic search is applied for searching short text fields of relevant text-based columns of the plurality of tables, and wherein a directly semantic search is applied to capture relevant content based on meaning for searching long text fields of the relevant text-based columns if the approach used for short text field fails to retrieve intended data.
